**Europäisches Patentamt**

**European Patent Office**

**Office européen des brevets**

(19)

(11) Veröffentlichungsnummer: **0 121 695**

**B1**

(12)

# EUROPÄISCHE PATENTSCHRIFT

(45) Veröffentlichungstag der Patentschrift:
**20.05.87**

(21) Anmeldenummer: **84101612.4**

(22) Anmeldetag: **16.02.84**

(51) Int. Cl.⁴: **A 46 B 13/02** // **H01H29/02**

(54) Schalteinrichtung für eine rotierende Zahnbürste.

(30) Priorität: **16.03.83  DE 3309412**

(43) Veröffentlichungstag der Anmeldung:
**17.10.84 Patentblatt 84/42**

(45) Bekanntmachung des Hinweises auf die Patenterteilung:
**20.05.87 Patentblatt 87/21**

(84) Benannte Vertragsstaaten:
**AT BE CH FR GB IT LI LU NL SE**

(56) Entgegenhaltungen:
**FR-A-1 184 399**
**US-A-2 618 797**
**US-A-4 163 300**

(73) Patentinhaber: **Benz, Dieter Dr., Hirschstrasse 21, D-7900 Ulm (DE)**

(72) Erfinder: **Benz, Dieter Dr., Hirschstrasse 21, D-7900 Ulm (DE)**

(74) Vertreter: **Patentanwälte Dr. Solf & Zapf, Zeppelinstrasse 53, D-8000 München 80 (DE)**

LIBER, STOCKHOLM 1987

## Beschreibung

Die Erfindung bezieht sich auf eine rotierende Zahnbürste gemäß Oberbegriff des Anspruchs 1, wie sie aus der DE-A-32 11 984 bekannt ist.

Ein Problem bei allen bekannten rotierenden Zahnbürsten, die mit einem Schwerkraftschalter arbeiten, stellt die Umschaltdauer und vor allem die Ansprechempfindlichkeit beim Kippen des Schalters dar. Mit den bisher verwendeten Schaltern kann ein sogenanntes "Stottern", d.h. ein kurzzeitiges, mehrmaliges Aussetzen der Drehbewegung des Motors beim Drehen der Zahnbürste um die Längsachse, wenn die Schaltelemente des Schalters sich vom Kontakt lösen und zum Gegenkontakt streben, nicht vermieden werden. Das Stottern stört jedoch beim Zähneputzen ganz erheblich, weil nicht zu erkennen ist, ob die Zahnbürste aufgrund des Schaltvorganges oder aufgrund eines Defektes stottert oder stillsteht. Zudem kann sich beim Stottern der Zahnbürste auch die Drehrichtung wechselnd ändern, so daß auch falsche Drehrichtungen (weiß-rot) auftreten.

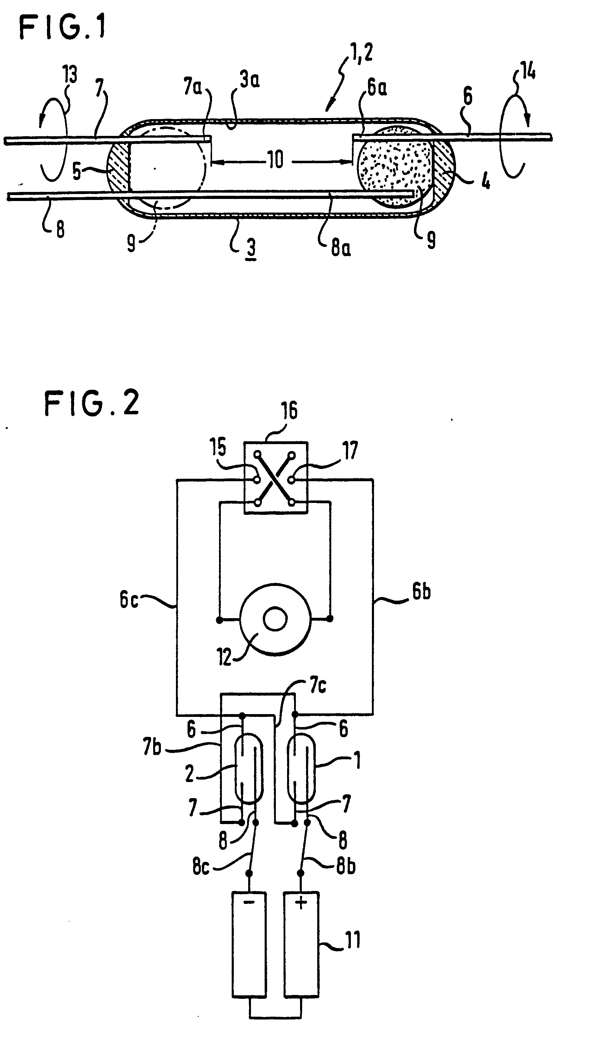

Bei der aus der DE-A-32 11 984 bekannten Zahnbürste wird bei Beginn des Zähneputzens durch Bedienung des Handschalters festgelegt, ob mit dem Putzen der Zähne des Ober- oder des Unterkiefers begonnen werden soll. Die Umschaltung für die rechte und linke Seite für die Innen- und Außenseite der Zähne erfolgt jeweils automatisch dergestalt, daß die Bürste immer die richtige Drehrichtung, d.h. vom Zahnfleisch zum Zahn, also von "rot" nach "weiß", erhält. Für das Einstellen der richtigen Drehrichtung für den anderen Teil des Kiefers wird dann der manuell zu betätigende Schalter nochmals geschaltet, woraufhin das Gerät für das Putzen der anderen Kieferhälften programmiert ist. Die sich jeweils gegenüberliegenden Elektroden des Schwerkraftschalters werden dabei mittels der der Schwerkraft unterliegenden Quecksilberperle miteinander verbunden. Wird die bekannte Zahnbürste um ihre Längsachse gedreht, so wird die Kontaktierung zweier zuvor miteinander verbundener Elektroden dadurch aufgehoben, daß die Quecksilberperle ihre vorherige Stellung verläßt und je nach Schwenkwinkel eine neue Stellung einnimmt. Durch eine 180°-Drehung der Zahnbürste wird erreicht, daß die Quecksilberperle zwei weitere, eine Drehrichtungsumkehr der Zahnbürste vornehmende Elektroden miteinander verbindet. Erfolgt jedoch eine Drehung der Zahnbürste um weniger als 180°, so ist insbesondere in einer Verschwenkstellung im Bereich um 90° nicht sichergestellt, daß eine Drehrichtungsumkehr der Zahnbürste erfolgt, denn in diesem Bereich hat die Quecksilberperle die bisherige Kontaktierung bereits unterbrochen, eine Kontaktierung der gegenüberliegenden Elektroden jedoch noch nicht vorgenommen. Diese Kontaktierungsschwierigkeiten resultieren insbesondere aus der Anordnung und Formgebung der Elektroden (vgl. Fig. 2). In diesem Stellungsbereich kommt es daher zu einer Unterbrechung oder einem "Stottern" des Antriebes.

In der US-A-2 618 797 ist eine rotierende Zahnbürste gemäß Oberbegriff des Anspruchs 1 beschrieben. Der Quecksilberschwerkraftschalter ist ein Sensor aus einem im querschnitt runden Röhrchen mit nach außen gewölbten Böden. Leiterdrahtabzweigungen sind jeweils mit einem Ende des Röhrchens verbunden und dienen zur Kontaktierung mit der Quecksilberperle. Es wird auch eine Verwendung zweier derartiger Quecksilberschwerkraftschalter vorgeschlagen, bei denen jeweils nur an einem Ende eine Kontaktierung vorgesehen ist.

In der FR-A-1 184 399 ist ein Quecksilberschwerkraftschalter für ein Gyroskop beschrieben, der ein gekrümmtes Glasröhrchen umfaßt. In diesem Glasröhrchen sind ein kreisbogenförmiger Leiterdraht als gemeinsame Elektrode und zwei Leiterdrähte als Elektroden angeordnet. Durch diese Ausgestaltung wird der Funktion und Dynamik, insbesondere der Präzisionsbewegung, Rechnung getragen.

Bei einer rotierenden Zahnbürste gemäß der US-A-4 163 300 dient ein Schwerkraftschalter zum Umschalter der Drehrichtung eines Elektromotors. Der Schwerkraftschalter ist in Form eines zylindrischen Gehäuses ausgebildet, in dem ein zylindrischer Kern axial verschiebbar ist. Im Kern sind verschiebbare Steckerstifte angeordnet. Entsprechende Kontaktierungen sind vorgesehen.

Der Erfindung liegt die Aufgabe zugrunde, eine rotierende Zahnbürste zu schaffen, mit der ein Stottern des Antriebes der Zahnbürste beim Drehrichtungsumschalten vermieden wird.

Diese Aufgabe wird durch die Merkmale des Hauptanspruchs gelöst. In den Unteransprüchen werden zweckmäßig Ausführungsformen der Erfindung gekennzeichnet. Anhand der Zeichnung wird die Erfindung beispielhaft näher erläutert. Es zeigen:

Fig. 1 schematisch eine Seitenansicht eines Sensors,

Fig. 2 schematisch die erfindungsgemäße Schalteinrichtung mit zwei Sensoren,

Fig. 3 schematisch die Anordnung des Schwerkraftschalters in einer Gehäusehälfte des Zahnbürstengehäuses im Querschnitt,

Fig. 4 schematisch die Anordnung des Schwerkraftschalters in der Gehäusehälfte in der Draufsicht.

Die erfindungsgemäße Zahnbürste weist mehrere, vorzugsweise zwei gleich ausgebildete Sensoren 1, 2 auf (Fig. 1). Ein Sensor 1, 2 besteht aus einem beidendig geschlossenen, vorzugsweise im Querschnitt runden, Röhrchen 3 aus Glas oder Kunststoff mit vorzugsweise nach außen gewölbten Böden 4, 5. Den Boden 4 durchgreift seitlich, also außermittig, ein Leiterdraht 6, der sich im Röhrchen 3 parallel zur Wandung 3a, jedoch im Abstand davon erstreckt und dessen Bereich 6a nicht bis zur Längsmitte reicht. In gleicher Weise durchgreift den Boden 5 ein Leiterdraht 7, der vorzugsweise dem Leiterdraht 6 in Längsrichtung gegenüberliegend angeordnet ist und dessen im Röhrchen 3 sitzender Bereich 7a vorzugsweise gleich lang ist, wie der Bereich 6a des Leiterdrahtes 6. Zudem durchgreift den Boden 5 ein weiterer Leiterdraht 8, dessen Bereich 8a im Röhrchen 3 im Abstand von der Wandung 3a und vom Leiterdraht 7 sowie zu diesem parallel verlauf end angeordnet ist, und der länger als der Leiterdraht 7 ausgeführt ist, dergestalt, daß er das Ende des Bereichs 6a zum Boden 4 hin überragt und kurz vor dem Boden 4 endet. Im Röhrchen 3 befindet sich eine Quecksilberperle 9, deren Durchmesser vorzugsweise nur geringfügig kleiner ist als der Durchmesser des Röhrchens 3, wobei die Länge des Röhrchens 3, z.B. etwa dem 4-fachen des Durchmessers der Quecksilberperle 9 entspricht und wobei der Abstand 10 zwischen den Leiterdrahten 6 und 7 großer ist als der Durchmesser der Quecksilberperle 9 und vorzugsweise das 2-fache des Durchmessers der Perle entspricht. Der senkrechte Abstand im Röhrchen 3 zwischen dem Leiterdraht 8 und jeweils dem Leiterdrahtbereich 6a und 7a ist geringer als der Durchmesser der Quecksilberperle 9 beträgt.

Der Leiterdraht 5 ist außerhalb des Röhrchens 3 an eine elektrische Energiequelle 11, z.B. eine Batterie oder einen Akkumulator, angeschlossen. Die Leiterdrahte 6 und 7 stehen mit dem Antriebsmotor 12 in Verbindung, dergestalt, daß der Motor sich in Pfeilrichtung 13 dreht, wenn die Quecksilberperle 9 sich linksseitig in Fig. 1 befindet, und sich in Pfeilrichtung 14 dreht, wenn die Quecksilberperle 9 sich rechtsseitig befindet.

Erfindungsgemäß werden zwei Sensoren 1 und 2 gemäß Fig. 2 verwendet. Dabei steht z.B. der Leiterdraht 8 des Sensors 1 über eine Leitung 8b mit dem Pluspol einer elektrischen Energiequelle 11 und der Leiterdraht 8 des Sensors 2 mit einer Leitung 8c mit dem Minuspol der elektrischen Energiequelle 11 in Verbindung. Zudem ist der Leiterdraht 7 des Sensors 2 mit dem Leiterdraht 6 des Sensors 1 über eine Leitung 7b verbunden. Vom Leiterdraht 7 des Sensors 1 führt eine Leitung 7c zum Leiterdraht 6 des Sensors 2. Der Leiterdraht 6 des Sensors 2 ist über eine Leitung 6c mit einem Pol 15 eines manuell zu betätigenden Schalters 16 verbunden, während der Leiterdraht 6 des Sensors 1 durch eine Leitung 6b mit dem Gegenpol 17 des Schalters 16 verbunden ist. Die Schaltwege des Schalters 16 sind dabei derart ausgeführt, daß durch Betätigung des Schalters eine Rechts- oder Linksdrehung des Motors gewählt werden kann.

Durch die erfindungsgemäße Kombination von zwei Sensoren kann ein stotterfreier Lauf der Zahnbürste beim Umschalten der Drehrichtung des Motors durch die Sensoren gewahrleistet werden, wobei insbesondere der Leiterdrahtbsreich 8a jeweils bewirkt, daß jede Quecksilberperle 9 der Sensoren 1, 2 immer in Kontakt mit einem Pol der Energiequelle 1 bleibt, und zwar die Quecksilberperle des Sensors 1 mit dem Pluspol und die Quecksilberperle des Sensors 2 mit dem Minuspol, so daß die Umschaltung fließend erfolgt.

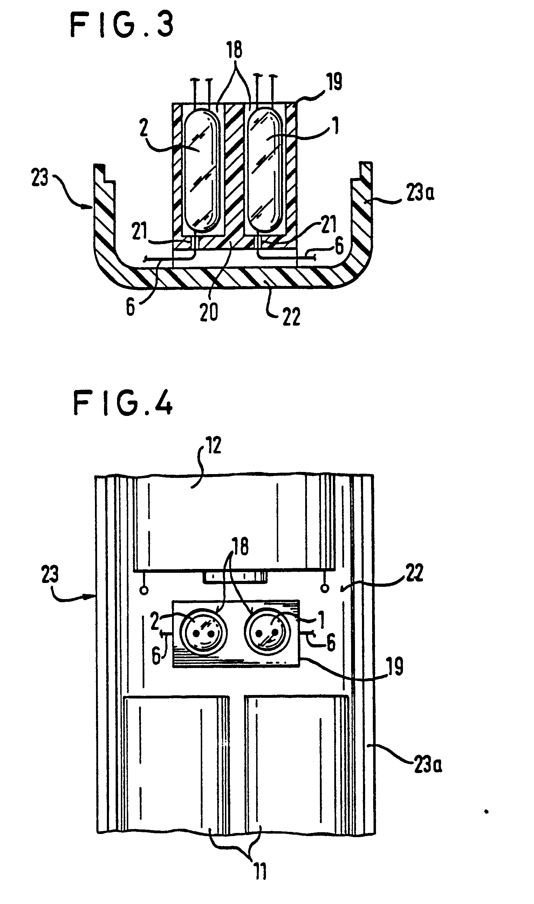

Nach einer bevorzugten Ausfuhrungsform der Erfindung stecken die Sensoren 1 und 2 vorzugsweise form- und kraftschlüssig in zwei parallel zueinander angeordneten, oben offenen Kammern 18 eines Kunststoffgehäuses 19, wobei im Boden 20 der Kammern 18 Durchgänge 21 für die Leiterdrähte, z.B für die Leiterdrahte 6, eingebracht sind (Fig 3) Das Gehäuse 19 sitzt fest auf dem Boden 22 einer im Querschnitt U-förmigen Gehausehalbschale 23 des Zahnburstengehäuses (nicht vollständig dargestellt), und zwar derart, daß die Sensoren 1 und 2 in Querrichtung des Zahnbürstengehäuses, vorzugsweise senkrecht zur Langsachse nebeneinanderstehend angeordnet sind (Fig. 3 und 4). Dabeisind die elektrischen Energiequellenll vorzugsweise im rückwärtigen Bereich des Zahnbürstengehäuses hinter dem Sensorgehäuse 19 und der Motor 12 vor dem Sensorgehäuse 19 angeordnet (Fig. 4).

Die Gehäusehalbschale 23 wird durch eine ebenfalls im Querschnitt U-förmige Gegenhalbschale (nicht dargestellt) zur Bildung des Zahnbürstengehäuses geschlossen, wobei das daraus resultierende viereckige Gehäuse vorzugsweise deshalb verwendet wird, weil es die Unverwechselbar' eit und die Vermeidung des Stotterns der Zahnbürste unterstützt; denn mit dem viereckigen Gehäuse kann die Lage der Sensoren 1 und 2 erkennbar gemacht werden, indem z.B. der manuell zu betätigende Schalter außen auf einer Seitenwandung 23a sitzt und die Seite der Zahnbürste markiert, die zahnseitig in den Mund eingeführt werden soll, wodurch eine genau kontrollierbare Drehung des Zahnbürstengehäuses um 180° um seine Längsachse fur das stotterfreie Umschalten des Motors und damit zum Wechseln der Drehrichtung der Zahnburste durchgefuhrt werden kann.

**Pa128tentansprüche**

1. Rotierende Zahnbürste, mit einem Gehäuse, mit einem eine Antriebswelle aufweisenden Elektromotor in dem Gehäuse, mit einer Kupplungswelle, die an ihrem einen Ende eine Bürste trägt und die mit ihrem anderen Ende mit der Antriebswelle verbunden ist, mit einer mit dem Elektromotor verbundenen Schalteinrichtung für das Umschalten der Drehrichtung des Elektromotors in dem Gehäuse, mit einem Handschalter außen auf dem Gehäuse zum manuellen Betätigen der Schalteinrichtung, und mit einem Quecksilberschwerkraftschalter in dem Gehäuse zum automatischen Betätigen der Schalteinrichtung durch Drehen des Gehäuses um seine Längsachse, dadurch gekennzeichnet, daß der Quecksiiberschwerkraftschalter aus einem ersten Sensor (1) und einem zweiten Sensor (2) besteht, wobei jeder Sensor (1, 2) aus einem eine Wandung (3a) aufweisenden Röhrchen (3) aus Glas oder Kunststoff besteht, das durch einen ersten Boden (4) und einen zweiten Boden (5) beidendig geschlossen ist, daß den ersten Boden (4) außermittig ein erster Leiterdraht (6) durchgreift, dessen in dem Röhrchen (3) liegender Teil (6a) parallel zu der Wandung (3a) und im Abstand von dieser angeordnet ist und nicht bis zur Längsmitte des Röhrchens (3) reicht, daß den zweiten Boden (5) außermittig ein zweiter Leiterdraht (7) durchgreift, dessen in dem Röhrchen (3) liegender Teil (7a) parallel zu der Wandung (3a) und im Abstand von dieser angeordnet ist und nicht bis zur Längsmitte des Röhrchens (3) reicht, daß den zweiten Boden (5) ein dritter Leiterdraht (8) durchgreift, dessen in dem Röhrchen liegender Teil (8a) parallel zu der Wandung (3a) und im Abstand von dieser sowie von dem Teil (6a) und dem Teil (7a) angeordnet ist und kurz vor dem ersten Boden (4) endet, daß eine Quecksilberperle (9) in dem Röhrchen (3) angeordnet ist, deren Durchmesser geringfügig kleiner ist als der Innendurchmesser des Röhrchens (3), daß der Abstand (10) zwischen den Enden des ersten (6) und des zweiten (7) Leiterdrahtes größer ist als der Durchmesser der Quecksilberperle (9), daß in dem Röhrchen (3) der Parallelabstand des dritten Leiterdrahtes (8) zum ersten (6) und zum zweiten (7) Leiterdraht geringer ist als der Durchmesser der Quecksilberperle (9), daß der dritte Leiterdraht (8) des ersten Sensors (1) über eine Leitung (8b) mit dem Pluspol einer elektrischen Energiequelle (11) und der dritte Leiterdraht (8) des zweiten Sensors (2) über eine Leitung (8c) mit dem Minuspol der elektrischen Energiequelle (11) verbunden ist, daß der zweite Leiterdraht (7) des zweiten Sensors (2) mit dem ersten Leiterdraht (6) des ersten Sensors (1) über eine Leitung (7b) verbunden ist, daß vom zweiten Leiterdraht (7) des ersten Sensors (1) eine Leitung (7c) zum ersten Leiterdraht (6) des zweiten Sensors (2) führt, und daß der erste Leiterdraht (6) des zweiten Sensors (2) über eine Leitung (6c) und der erste Leiterdraht (6) des ersten Sensors (1) über eine Leitung (6b) mit dem Handschalter (16) verbunden sind.

2. Rotierende Zahnbürste nach Anspruch 1, dadurch gekennzeichnet, daß die Sensoren (1, 2) in Querrichtung des Zahnbürstengehäuses vorzugsweise senkrecht zur Längsachse nebeneinanderstehend angeordnet sind.

3. Rotierende Zahnbürste nach Anspruch 1 oder 2, dadurch gekennzeichnet, daß das Gehäuse zu seinem genau kontrollierbaren, um seine Längsachse zur Drehrichtungsumschaltung erfolgenden, manuellen Drehen im Querschnitt viereckig ausgebildet ist.

4. Rotierende Zahnbürste nach einem oder mehreren der Ansprüche 1 bis 3, dadurch gekennzeichnet, daß das Röhrchen (3) im Querschnitt rund ist und die Böden (4, 5) nach außen gewölbt sind, daß der zweite Leiterdraht (7) dem ersten Leiterdraht (6) in Längsrichtung gegenüberliegend angeordnet ist, daß ein im Röhrchen (3) liegender Teil (7a) des zweiten Leiterdrahtes (7) gleich lang ist wie ein im Röhrchen (3) liegender Teil (6a) des ersten Leiterdrahtes (6), daß die Länge des Röhrchens (3) dem Vierfachen des Durchmessers der Quecksilberperle (9) und der Abstand (10) zwischen dem ersten und zweiten Leiterdraht (6, 7) dem Zweifachen des Durchmessers der Quecksilberperle (9) entspricht.

5. Rotierende Zahnbürste nach einem oder mehreren der Ansprüche 1 bis 4, dadurch gekennzeichnet, daß die Sensoren (1, 2) vorzugsweise form- und kraftschlüssig in zwei parallel zueinander angeordneten, oben offenen Kammern (18) eines Sensorgehäuses (19) aus Kunststoff sitzen.

6. Rotierende Zahnbürste nach Anspruch 5, dadurch gekennzeichnet, daß im Boden (20) der Kammern (18) Durchgänge (21) für die ersten Leiterdrähte (6) eingebracht sind.

7. Rotierende Zahnbürste nach Anspruch 5 oder 6, dadurch gekennzeichnet, daß das Sensorgehäuse (19) fest auf dem Boden (22) einer im Querschnitt U-förmigen Gehäusehalbschale (23) des Zahnbürstengehäuses sitzt.

8. Rotierende Zahnbürste nach einem oder mehreren der Ansprüche 1 bis 7, dadurch gekennzeichnet, daß die Energiequelle (11) im rückwärtigen Bereich des Zahnbürstengehäuses hinter dem Sensorgehäuse (19) und der Elektromotor (12) vor dem Sensorgehäuse angeordnet ist.

9. Rotierende Zahnbürste nach einem oder mehreren der Ansprüche 1 bis 8, dadurch gekennzeichnet, daß der Handschalter (16) außen auf einer Seitenwandung (23a) sitzt.

10. Rotierende Zahnbürste nach Anspruch 9, dadurch gekennzeichnet, daß der Handschalter (16) auf der zahnseitigen Seitenwandung (23a) sitzt.

**Claims**

1. A rotary toothbrush comprising a housing, aan electric motor within the housing having a drive shaft, a transmission shaft which carries a brush at one end and which is connected to the electric motor at the other end, a switching device connected to the electric motor for changing the direction of rotation of the electric motor in the housing, a manual switch on the outside of the housing for manual actuation of the switching device, and a mercury gravity switch in the housing for automatic actuation of the switching device by turning of the housing about its longitudinal axis, characterised by the fact that the mercury gravity switch consists of a first sensor (1) and a second sensor (2), with each sensor (1, 2) consisting of a small tube (3) having a wall (3a) made of glass or synthetic material which is closed at both ends by a first end wall (4) and a second end wall (5), that the first end wall (4) is penetrated eccentrically by a first conductor wire (6) of which the part (6a) within the tube (3) is disposed parallel to the wall (3a) and at a distance from the latter and does not extend as far as the longitudinal centre of the tube (3), that the second end wall (3) is penetrated eccentrically by a second conductor wire (7) of which the part (7a) within the tube (3) is disposed parallel to the wall (3a) and at a distance from the latter and does not extend as far as the longitudinal centre of the tube (3), that the second end wall (5) is penetrated by a third conductor wire (8) of which the part (8a) within the tube is disposed parallel to the wall (3a) and at a distance from the latter, as well as from the part (6a) and the part (7a), and ends shortly before the first end wall (4), that a mercury bead (9) is contained in the tube (3), its diameter being slightly smaller than the internal diameter of the tube (3), that the distance (10) between the ends of the first (6) and the second (7) conductor wires is. greater than the diameter of the mercury bead (9), that within the tube (3) the lateral distance from the third conductor wire (8) to the first conductor wire (6) and to the second conductor wire (7) is less than the diameter of the mercury bead (9), that the third conductor wire (8) of the first sensor (1) is connected by a lead (8b) to the positive pole of an electrical energy source (11) and the third conductor wire (8) of the second sensor (2) is connected by a lead (8c) to the negative pole of the electrical energy source (11), that the second conductor wire (7) of the second sensor (2) is connected to the first conductor wire (6) of the first sensor (1) by a lead (7b), that a lead (7c) extends from the second conductor wire (7) of the first sensor (1) to the first conductor wire (6) of the second sensor (2), and that the first conductor wire (6) of the second sensor (2) is connected by a lead (6c), and the first conductor wire (6) of the first sensor (1) is connected by a lead (6b), to the manual switch (16).

2. A rotary toothbrush according to claim 1, characterised by the fact that the sensors (1, 2) are disposed in the transverse direction of the toothbrush housing, preferably perpendicularly to the longitudinal axis, alongside one another.

3. A rotary toothbrush according to claim 1 or 2, characterised by the fact that the housing is configured square in cross-section for the precise controllability of its manual turning, which takes place about its longitudinal axis for purposes of the changeover switching of the direction of rotation.

4. A rotary toothbrush according to one or more of claims 1 to 3, characterised by the fact that the tube (3) is round in cross-section and the end walls (4, 5) are arched outwards, that the second conductor wire (7) is disposed oppositely in the longitudinal direction to the first conductor wire (6), that the part (7a) of the second conductor wire (7) within the tube (3) is of the same length as the part (6a) of the first conductor wire (6) within the tube (3), and that the length of the tube (3) is four times the diameter of the mercury bead (9) and the distance (10) between the first and second conductor wires (6, 7) is twice the diameter of the mercury bead (9).

5. A rotary toothbrush according to one or more of claims 1 to 4, characterised by the fact that the sensors (1, 2) are preferably seated positively and tensionally locked in two chambers (18), which are disposed parallel to one another and are open at the top, of a sensor housing (19) made of synthetic material.

6. A rotary toothbrush according to claim 5, characterised by the fact that passages (21) for the first conductor wires (6) are inserted in the base (20) of the chambers (18).

7. A rotary toothbrush according to claim 5 or 6, characterised by the fact that the sensor housing (19) is seated firmly on the base (22) of a housing halfshell (23), which is U-shaped in cross-section, of the toothbrush housing.

8. A rotary toothbrush according to one or more of claims 1 to 7, characterised by the fact that the energy source (11) is disposed in the rearward part of the toothbrush housing behind the sensor housing (19), and the electric motor (12) is disposed in front of the sensor housing.

9. A rotary toothbrush according to one or more of claims 1 to 8, characterised by the fact that the manual switch (16) is located outwardly on a side wall (23a).

10. A rotary toothbrush according to claim 9, characterised by the fact that the manual switch (16) is located on the side wall (23a) which faces the teeth.

**Revendications**

1. Brosse à dents rotative comprenant un boîtier contenant un moteur électrique muni d'un arbre d'entraînement, avec un axe d'accouplement qui porte à l'une de ses extrémités une brosse et est relié par son autre extrémité à l'arbre d'entraînement, comprenant en outre un dispositif de commutation relié au moteur électrique pour inverser le sens de rotation du moteur électrique dans le boîtier, ainsi qu'un interrupteur manuel sur l'extérieur du boîtier pour l'actionnement manuel du dispositif de commutation et, à l'intérieur du boîtier, un interrupteur à mercure basculant par gravité pour l'actionnement automatique du dispositif de commutation en faisant pivoter le boîtier autour de son axe longitudinal,

caractérisée en ce que l'interrupteur à mercure basculant par gravité consiste en un premier détecteur (1) et un deuxième détecteur (2), chaque détecteur (1, 2) consistant en un tube (3) en verre ou en matière synthétique muni d'une paroi (3a) et fermé aux deux extrémités par un premier fond (4) et un deuxième fond (5), en ce que le premier fond (4) est traversé excentriquement par un premier fil conducteur (6) dont la portion (6a) située dans le tube (3) est disposée parallèlement à la paroi (3a), à une certaine distance de celle-ci et ne s'étend pas jusqu'au milieu de la longueur du tube (3), que le fond (5) est traversé excentriquement par un deuxième fil conducteur (7) dont la portion (7a) située dans le tube (3) est disposée parallèlement à la paroi (3a), à une certaine distance de celle-ci et ne s'étend pas jusqu'au milieu de la longueur du tube, que le deuxième fond (5) est traversé par un troisième fil conducteur (8) dont la portion (8a), située dans le tube, est disposée parallèlement à la paroi et à une certaine distance de celle-ci, ainsi que de la portion (6a) et (7a) et s'étend jusqu'au voisinage immédiat du premier fond (4), qu'une goutte de mercure (9) est disposée dans le tube (3) dont le diamètre est légèrement inférieur au diamètre intérieur du tube (3), que la distance (10) entre les extrémités du premier (6) et du deuxième (7) fils conducteurs est supérieure au diamètre de la goutte de mercure (9), que, dans le tube (3), la distance parallèle du troisième fil conducteur (8) par rapport au premier (6) et deuxième (7) fils conducteurs est inférieure au diamètre de la goutte de mercure (9), que la troisième fil conducteur (8) du premier détecteur (1) est relié par un fil conducteur (8b) au pôle positif d'une source d'énergie électrique (11) et que le troisième fil conducteur (8) du deuxième détecteur (2) est relié par un fil (8c) au pôle négatif d'une source d'énergie électrique (11), que le deuxième fil conducteur (7) du deuxième détecteur (2) est relié au premier fil conducteur (6) du premier détecteur (1) par un fil (7b), qu'un fil (7c) conduit du deuxième fil conducteur (7) du premier détecteur (1) vers le premier fil conducteur (6) du deuxième détecteur (2), et que le premier fil conducteur (6) du deuxième détecteur (2) est relié par un fil (6c) et le premier fil conducteur (6) du premier détecteur (1) par un fil (6b), à l'interrupteur manuel (16).

2. Brosse à dents rotative selon la revendication 1, caractérisée en ce que les détecteurs (1, 2) sont disposés côte à côte dans la direction transversale du boîtier de la brosse à dents, de préférence perpendulairement à l'axe longitudinal.

3. Brosse à dents rotative selon la revendication 1 ou 2, caractérisée en ce que le boîtier a une section droite rectangulaire pour un contrôle exact de la rotation manuelle s'effectuant autour de son axe longitudinal pour une inversion du sens de rotation.

4. Brosse à dents rotative selon l'une ou plusieurs des revendications 1 à 3, caractérisée en ce que le tube (3) a une section droite circulaire et que les fonds (4, 5) sont bombés vers l'extérieur, que le deuxième fil conducteur (7) est disposé en regard du premier fil conducteur (6) dans la direction longitudinale, qu'une portion (7a) du deuxième fil conducteur (7), située dans le tube (3), a la même longueur qu'une portion (6a) du premier fil conducteur (6) située dans le tube (3), que la longueur du tube (3) correspond au quadruple du diamètre de la goutte de mercure (9) et que la distance (10) entre le premier et le deuxième fils conducteurs (6, 7) correspond au double du diamètre de la goutte de mercure (9).

5. Brosse à dents rotative selon l'une ou plusieurs des revendications 1 à 4, caractérisée en ce que les détecteurs (1, 2) sont placés, de préférence à l'aide de clabots et sous l'influence de la gravité, dans deux chambres (18) disposées en parallèle et ouvertes sur le haut d'un logement des détecteurs (19) en matière synthétique.

6. Brosse à dents rotative selon la revendication 5, caractérisée en ce que des passages (21) pour les premiers fils conducteurs (6) sont ménagés dans le fond (28) des chambres (18).

7. Brosse à dents rotative selon la revendication 5 ou 6, caractérisée en ce que le logement des détecteurs (19) est placé de manière fixe sur le fond (22) d'une demicoupe (23) de section droite en U du boîtier de la brosse à dents.

8. Brosse à dents rotative selon l'une ou plusieurs des revendications 1 à 7, caractérisée en ce que la source d'énergie (11) est placée dans la région postérieure du boîtier de la brosse à dents, derrière le logement des détecteurs (19) et que le moteur électrigue (12) est placé devant le logement des détecteurs.

9. Brosse à dents rotative selon l'une ou plusieurs des revendications 1 à 8, caractérisée en ce que l'interrupteur manuel (16) est placé à l'extérieur sur une paroi latérale (23a).

18. Brosse à dents rotative selon la revendication 9, caractérisée en ce que l'interrupteur manuel (16) est placé sur la paroi latérale (23a) faisant face aux dents.

0 121 695

FIG.1

FIG.2

# FIG.3

# FIG.4